Europäisches Patentamt

European Patent Office

Office européen des brevets

(19)

(11) Veröffentlichungsnummer: **0 192 852**
**B1**

(12) **EUROPÄISCHE PATENTSCHRIFT**

(45) Veröffentlichungstag der Patentschrift: **11.04.90**

(51) Int. Cl.⁵: **F 16 G 13/16, F 16 L 3/01**

(21) Anmeldenummer: **85116412.9**

(22) Anmeldetag: **21.12.85**

(54) Energieleitungsträger.

(30) Priorität: **01.03.85 DE 3507201**

(43) Veröffentlichungstag der Anmeldung:
**03.09.86 Patentblatt 86/36**

(45) Bekanntmachung des Hinweises auf die
Patenterteilung:
**11.04.90 Patentblatt 90/15**

(84) Benannte Vertragsstaaten:
**AT CH DE FR GB IT LI SE**

(56) Entgegenhaltungen:
**EP-A-0 038 953**
**DE-A-2 622 006**
**DE-A-3 107 045**
**DE-A-3 139 737**

(73) Patentinhaber: **Kabelschlepp Gesellschaft mit
beschränkter Haftung
Marienborner Strasse 75
D-5900 Siegen 1 (DE)**

(72) Erfinder: **Moritz, Werner
Wetzlarer Strasse 122
D-5900 Siegen 1 (DE)**

(74) Vertreter: **Patentanwälte Dipl.-Ing. Alex Stenger
Dipl.-Ing. Wolfram Watzke Dipl.-Ing. Heinz J.
Ring
Kaiser-Friedrich-Ring 70
D-4000 Düsseldorf 11 (DE)**

EP 0 192 852 B1

Beschreibung

Die Erfindung betrifft einen Energieleitungsträger für die Anordnung zwischen einem ortsfesten Anschluß und einem beweglichen Verbraucher mit einer Vielzahl ineinandergreifender und gegeneinander abwinkelbarer, U-förmig ausgebildeter Rohrglieder, die am Umfang mit sich hintergreifenden Anschlägen versehen sind und die an ihrer offenen Seite mit nach innen weisenden Vorsprüngen ausgebildet sind, zwischen denen ein flexibles Abdeckbend eingezogen ist, welches die Öffnungen der Rohrglieder freitragend überspannt.

Aus den DE—PS 28 05 832 und 28 53 715 sind Energieleitungsträger bekannt, die aus einer Reihe ineinandergreifender und gegeneinander abwinkelbarer Rohrglieder bestehen, wobei zwei benachbarte Rohrglieder sich mit nach innen und nach außen gerichteten Anschlägen hintergreifen und der engere Teil eine umlaufende Rinne bildet, während der weitere Teil im Bereich einer Querschnittshälfte um die Breite der Rinne verkürzt ist, so daß der gegenseitige Schwenkwinkel konstruktiv begrenzt werden kann. Bei diesem bekannten Energieleitungsträger, der einen geschlossenen Schlauch bildet, ist zum Auswechseln oder Austauschen der Energieleitungen eine komplette Demontage erforderlich, bei der dann auch alle Energieleitungen am Anfang und Ende abgeklemmt, ausgezogen und anschließend wieder eingezogen und angeklemmt werden müssen. Deshalb kann dieser bekannte Energieleitungsträger praktisch nur dert eingesetzt werden, wo ein Auswechseln einzelner Energieleitungen nur sehr selten oder gar nicht vorkommt.

Ferner ist aus der DE—AS 26 22 006 eine Energieführungskette für die Anordnung zwischen einen ortsfesten Anschluß und einem beweglichen Verbraucher bekannt, bei der zwischen den Laschen teilbar ausgebildete Zwischenstege befestigt sind, die aus wenigstens zwei Gurten mit abgeflachtem Querschnitt und abgerundeten Schmalseiten sowie zwischen diesen angeordneten Trennstegen bestehen, die am oberen und unteren Ende mit Hinterschnidungen versehene, angeschnittene Ausnehmungen aufweisen, so daß die Gurte nach dem Einlagen in die Ausnehmung durch Verdrehen um ihre Längsachse kraft- und formschlüssig mit den Trennstegen verspannbar sind. Bei dieser bekannten Energieführungskette sind an den Enden der Gurte Klammern zum Einzichen eines Abdeckbandes vorgesehen. Wenn bei dieser bekannten Energieführungskette ein Auswechseln oder Austauschen der Energieleitungen notwendig wird, müssen nach dem Ausziehen eines Abdeckbandes die darunterliegenden Gurte aller Stege geöffnet und nachher wieder geschlossen werden. Damit ist ein ganz erheblicher Zeitaufwand verbunden.

Aus der DE—A—3 139 737 ist ein flexibles Leitungsführungsrohr der eingangs angegebenen Art bekannt, welches aus einstückigen, C-förmigen Profilringen besteht, deren einander gegenüberliegende Profilenden entweder unmittelbar oder mittelbar über eine in den Längsschlitz eingesetzte, flexible, langgestreckte Abdeckung lösbar miteinander verbunden sind. In der Ausführungsvariante mit der Abdeckung ist diese am konstruktiven Zusammenhalt der einzelnen Profile beteiligt. Ein Nachteil des bekannten Leitungsführungsrohres besteht deshalb darin, daß die Profile zur Bildung des flexiblen Leitungsführungsrohres verformt und durch die Abdeckung zusammengehalten werden müssen. Bei einer Demontage der Abdeckung zum Austausch von Energieleitungen können sich die Profile wieder verselbständigen, so daß das Leitungsführungsrohr auseinanderfällt.

Davon ausgehend liegt der Erfindung die Aufgabe zugrunde, einen einfach konstruierten Energieleitungsträger mit abwinkelbaren Rohrgliedern zu schaffen, der zum Auswechseln oder zum Austausch der Energieleitungen schnell geöffnet und wieder geschlossen werden kann, ohne sich dabei in seine Bestandteile zu zerlegen.

Als technische Lösung wird mit der Erfindung vorgeschlagen, daß sich Innenliegende, enge Rohrglieder mit außenliegenden, weiten Rohrgliedern abwechseln, wobei die engen Rohrglieder mit nach außen gerichteten Anschlägen und die weiten Rohrglieder mit nach innen gerichteten Anschlägen versehen sind, daß jedes weite Rohrglied aus einem U-förmigen Mittelteil und zwei an dessen Schenkel befestigten, L-förmigen Endteilen besteht und daß die engen Rohrglieder mit einer in ihrer Mittelebene angeordneten und nach innen vorspringenden Rippen versehen sind, die and den Seitenwänden mit den Vorsprüngen Schlitze zum Einziehen des Abdeckbandes bildet.

Bei einer praktischen Ausführungsform kann die Rippe zwischen den Seitenwänden mit Hinterschneidungen zum Befestigen von Trennstegen versehen sein, die unter dem Abdeckband enden. In weiterer Ausgestaltung können die freien Enden der weiten Rohrglieder nach innen umgebogen sein und die Vorsprünge der engen Rohrglieder hintergreifen.

Ein nach der erfindungsgemäßen Lehre ausgebildeter Energieleitungsträger hat den Vorteil, daß er mit wenigen Handgriffen auf seiner gesamten Länge geöffnet werden kann, um eine oder mehrere Energieleitungen auszutauschen, ohne daß sich dabei die weiten und engen Glieder aus ihrem Verbund lösen können. Auch das Schließen des Energieleitungsträgers nach dem Austausch bereitet keine Schwierigkeiten, weil dazu das Abdeckband lediglich wieder eingezogen werden muß. Ein Verklemmen des Abdeckbandes ist auch dann nicht zu besorgen, wenn sich die einzelnen Glieder auf den beiden Seiten des Energielei-

tungsträgers unterschiedlich schnell ineinanderschieben, denn das Abdeckband überspannt die Öffnung zwischen den Gliedern freitrsagend und übernimmt keine Verbindungsfunktion.

Weitere Einzelheiten und Vorteile ergeben sich aus der nachfolgenden Beschreibung eines in den Zeichnungen dargestellten Ausführungsbeispieles. In den Zeichnungen zeigen:

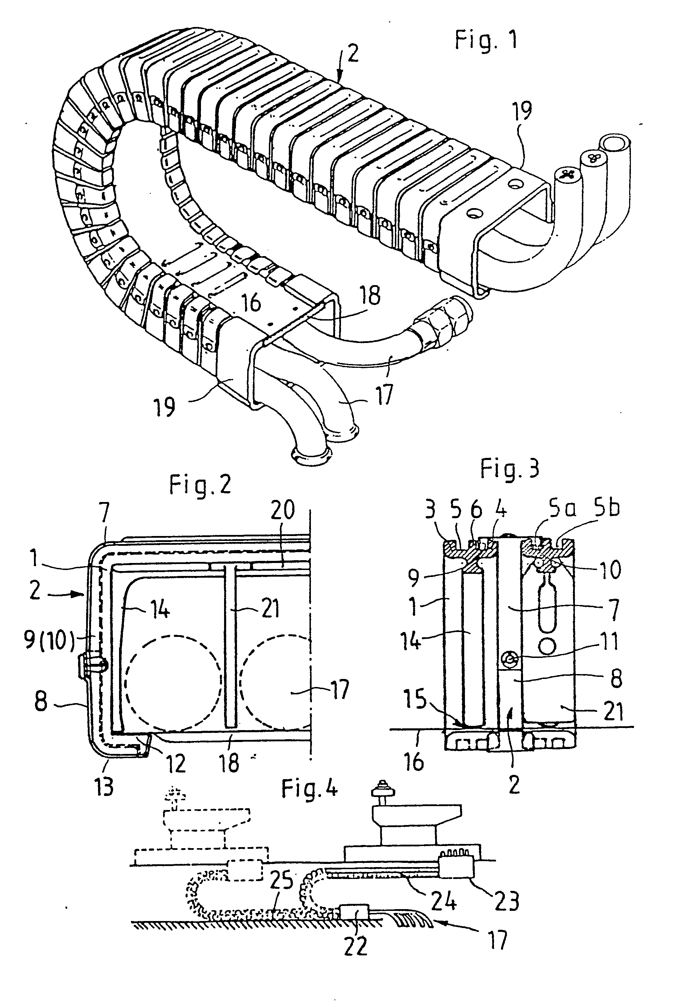

Fig. 1 einen Energieleitungsträger in perspektivischer Darstellung;

Fig. 2 einen Abschnitt miteinander verbundener Glieder in Längsrichtung gesehen;

Fig. 3 mehrere miteinander verbundene Glieder im Querschnitt;

Fig. 4 einen zwischen einem ortsfesten Anschluß und einem beweglichen Verbraucher angeordneten Energieleitungsträger.

Der dargestellte Energieleitungsträger besteht aus einer wechselnden Folge von engen Gliedern 1 und weiten Gliedern 2, die formschlüssig zusammengesteckt sind und aus der gestreckten Lage nur zu einer Seite hin gegeneinander verschwenkt werden können, während sie in der gestreckten Lage zu den anderen drei Seiten hin einen starren Strang bilden.

Jedes enge Glied 1 ist U-förmig ausgebildet und am äußeren Umfang mit Anschlägen 3, 4 versehen, die zwischen sich eine Rinne 5 bilden, welche durch einen in der Mittelebene angeordneten Anschlagring 6 geteilt ist.

Jedes zweite Glied 2 besteht in der dargestellten Ausführungsform aus drei Teilen, nämlich einem U-förmigen Mittelteil 7 und zwei an dessen Schenkel befestigten, L-förmigen Endteilen 8. Das Mittelteil 7 ist breiter als die beiden Endteile 8. Die Verkürzung der beiden Endteile 8 im Verhältnis zum Mittelteil 7 entspricht der Breite der Rinne 5 am engen Glied 1. In der dargestellten Ausführungsform verspringen die Endteile 8 auf jeder Seite um die Breite einer Teilrinne 5a oder 5b nach innen. Auf beiden Seiten sind das Mittelteil 7 und die Endteile 8 mit nach innen gerichteten Anschlägen 9, 10 versehen, welche in die Teilrinnen 5a und 5b am engen Glied 1 eingreifen. Die Endteile 8 sind mit Spreiznieten 11 an den Schenkeln des Mittelteiles 7 besfestigt. Beide Glieder 1 und 2 sind an der offenen Seite mit nach innen weisenden Vorsprüngen 12, 13 versehen. Die an den engen Gliedern 1 angeformten Vorsprünge 12 bilden mit einer in der Mittelebene angeformten und nach innen vorspringenden Rippe 14 Schlitze 15, in die ein flexibles Abdeckband 16 eingezogen ist, welches die Öffnungen der Glieder 1, 2 freitragend überspannt. Die freien Enden der Endteile 8 sind nach innen umgebogen und übergreifen die Vorsprünge 12, damit die Schenkel der weiten Glieder 2 nicht nach außen umgebogen werden können.

Die engen Glieder 1 bestehen vorzugsweise aus einem Isoliermaterial, insbesondere Kunststoff, so daß sie an ihrer Innenseite eine glatte und schonende Auflage für Energieleitungen 17 bilden. Die weiten Glieder 2 werden zweckmäßig aus einem dünnen Blech gestanzt und geprägt. Dabei ist es möglich, in der Mitte der Mittelteile 7 und Endteile 8 nach außen vorspringende Sicken einzuprägen, welche einerseits die Formstabilität erhöhen und andererseits der Auflage für den Energieleitungsträger beim bestimmungsgemäßen Gebrauch dienen.

Das Abdeckband 16 kann aus Kunststoff oder Stahl bestehen und wird an seinen Enden mit einer quer verlaufenden Sicke 18 versehen, die eine Versteifung bewirkt.

Die Rippe 14 kann zwischen den Schenkeln der engen Glieder 1 mit Hinterschneidungen 20 zum Befestigen von Trennstegen 21 versehen werden.

Ein nach dieser technischen Lehre ausgebildeter Energieleitungsträger ist dazu bestimmt, zwischen einem ortsfesten Anschluß 22 und einem beweglichen Verbraucher 23, beispielsweise dem Support einer Werkzeugmaschine, eingesetzt zu werden, um die Energieleitungen 17 schonend und zugentlastet zu führen. Dabei muß der Energieleitungsträger in seinem oberen Trum 24 selbsttragend sein, damit er nicht durchhängt und die Energieleitungen 17 geknickt werden. Zum unteren Trum 25 hin darf der Energieleitungsträger nur um einen bestimmten Radius gekrümmt werden können, welcher dem zulässigen Biegeradius der empfindlichsten Energieleitung 17 entspricht.

### Bezugsziffernliste

1 Glied (enges)
2 Glied (weites)
3 Anschlag
4 Anschlag
5 Rinne
5a Teilrinne
5b Teilrinne
6 Anschlagring
7 Mittelteil
8 Endteil
9 Anschlag
10 Anschlag
11 Spreiznut
12 Vorsprung
13 Vorsprung
14 Rippe
15 Schlitze
16 Abdeckband
17 Energieleitung
18 Sicke
19 Anschlußstück
20 Hinterschneidung
21 Trennsteg
22 Anschluß
23 Verbraucher
24 Trum (oberes)
25 Trum (unteres)

**Patentansprüche**

1. Energieleitungsträger für die Anordnung zwischen einem ortsfesten Anschluß (22) und einem beweglichen Verbraucher (23) mit einer Vielzahl ineinandergreifender und gegeneinander abwinkelbarer, U-förmig ausgesbildeter Rohrglieder (1, 2), die am Umfang mit sich hintergreifenden Anschlägen (3, 4; 9, 10) versehen sind und die an ihrer offenen Seite mit nach innen weisenden Vorsprüngen (12, 13) ausgebildet sind, zwischen denen ein flexibles Abdeckband (16) eingezogen ist, welches die Öffnungen der Rohrglieder (1, 2) freitragend überspannt, dadurch gekennzeichnet, daß sich innenliegende, enge Rohrglieder (1) mit außenliegenden, weiten Rohrgliedern (2) abwehseln, wobei die engen Rohrglieder (1) mit nach außen gerichteten Anschlägen (3, 4) und die weiten Rohrglieder (2) mit nach innen gerichteten Anschlägen (9, 10) versehen sind, daß jedes weite Rohrglied aus einem U-förmigen Mittelteil (7) und zwei an dessen Schenkel befestigen, L-förmigen Endteilen (8) besteht und daß die engen Rohrglieder mit einer in ihrer Mittelebene angeordneten und nach innen vorspringenden Rippen (14) versehen sind, die an den Seitenwänden mit den Vorsprüngen (12, 13) Schlitze (15) zum Einziehen des Abdeckbandes (16) bildet.

2. Energieleitungsträger nach Anspruch 1, dadurch gekennzeichnet, daß die Rippe (14) zwischen den Seitenwänden mit Hinterschneidungen (20) zum Befestigen von Trennstegen (21) versehen ist.

3. Energieleitungsträger nach den Ansprüchen 1 und 2, dadurch gekennzeichnet, daß die freien Enden der weiten Rohrglieder (2) nach innen umgebogen sind und die Vorsprünge (12) der engen Rohrglieder (1) hintergreifen.

**Revendications**

1. Support de conduites d'énergie disposé entre un raccord à poste fixe (22) et un appareil consommateur mobile (23), comportant une série d'éléments tubulaires (1, 2) constitués en forme de U, engrenant entre eux et pouvant s'incliner l'un par rapport à l'autre, ces éléments étant munis sur leur pourtour de butées d'engrènement (3, 3; 9, 10) et étant constitués, du côté ouvert, avec des saillies (12, 13) dirigées vers l'intérieur, une bande de recouvrement souple (16) étant introduite entre ces saillies et franchissant en portée libre les ouvertures des éléments tubulaires (1, 2), caractérisé en ce que des éléments tubulaires étroits (1) placés à l'intérieur alternent avec des éléments tubulaires larges (2) placés à l'extérieur, les éléments tubulaires étroits (1) étant munis de butées (3, 4) dirigées vers l'extérieur et les éléments tubulaires larges (2) étant munis de butées (9, 10) dirigées vers l'intérieur, en ce que chaque élément tubulaire large est constitué d'une partie médiane (7) en forme de U et de deux parties d'extrémités (8) en forme de L fixées sur les branches du U et en ce que les éléments tubulaires étroits sont munis d'une nervure (14) disposée dans leur plan médian et en saillie vers l'intérieur, cette nervure formant sur les parois latérales, avec les saillies (12, 13), des fentes (15) pour l'introduction de la bande de recouvrement (16).

2. Support de conduites d'énergie selon la revendication 1, caractérisé en ce que la nervure (14) est munie entre les parois latérales de logements (20) pour fixer des parois séparatrices (21).

3. Support de conduites d'énergie selon les revendications 1 et 2, caractérisé en ce que les extrémités libres des éléments tubulaires larges (2) sont repliées vers l'intérieur et s'engagent sur les saillies (12) des éléments tubulaires étroits (1).

**Claims**

1. A power line carrier or support or the like adapted to be disposed between a fixed connection (22) and a movable load (23) and having a number of meshing U-shaped tubular members (1, 2) which are bendable relatively to one another, have on the periphery abutments (3, 4; 9, 10) which engage one behind another and are formed on their open side with inwardly extending projections (12, 13) and spanning self-supportingly the apertures of the tubular members (1, 2) characterised in that internal narrow tubular members (1) alternate with external wide tubular members (2), the narrow tubular members (1) having outwardly directed abutments (3, 4) and the wide tubular members (2) having inwardly directed abutments (9, 10), each tubular member is in the form of a channel-section central part (7) and two L-shaped terminal parts (8) secured to the arms of the U-shaped central part (7), and the narrow tubular members have a rib (14) which is disposed in their centre-plane, projects inwardly and on the side walls cooperates with the projections (12, 13) to bound slots (15) for drawing-in the cover strip (16).

2. A carrier or support or the like according to claim 1, characterised in that the rib (14) is formed between the side walls with cut-back parts (20) for the securing of separating webs (21).

3. A carrier or support or the like according to claims 1 and 2, characterised in that the free ends of the wide tubular members (2) are bent round inwardly and engage behind the projections (12) of the narrow tubular members (1).

EP  0 192 852  B1

Fig. 1

Fig. 2

Fig. 3

Fig. 4

1